# EUROPÄISCHE PATENTSCHRIFT

(11) **EP 2 816 169 B1**
(45) Veröffentlichungstag und Bekanntmachung des Hinweises auf die Patenterteilung: **06.01.2016**
(21) Anmeldenummer: 14171702.5
(22) Anmeldetag: 10.06.2014
(51) Int. Cl.: E04C 5/16, F16B 7/18

(54) **Vorrichtung zum Verbinden von zwei exzentrisch zueinander angeordneten Stäben und Einrichtung zum Verbinden von zwei Bauelementen mit jeweils einem Stab**
Device for connecting two eccentrically arranged bars and device for connecting two construction elements, each equipped with a rod
Procédé de liaison de deux barres disposées de manière excentrique l'une par rapport à l'autre et dispositif de liaison de deux composants dotés respectivement d'une barre

(30) Priorität: 17.06.2013 DE 102013211235
(43) Veröffentlichungstag der Anmeldung: 24.12.2014
(73) Patentinhaber: Stahlwerk Annahütte Max Aicher GmbH & Co. KG, 83404 Ainring-Hammerau (DE)
(72) Erfinder: Aicher, Max, 83395 Freilassing (DE)
(74) Vertreter: Rau, Schneck & Hübner Patentanwälte Rechtsanwälte PartGmbB

(56) Entgegenhaltungen:
- WO-A1-92/08019
- DE-A1- 1 784 807
- DE-A1- 1 802 881
- DE-A1- 2 260 817
- DE-U1- 8 215 261

## Beschreibung

Die Erfindung betrifft eine Vorrichtung zum Verbinden von zwei exzentrisch zueinander angeordneten Stäben sowie eine Einrichtung zum Verbinden von zwei Bauelementen mit jeweils einem Stab.

Die DE 1 802 881 A1 offenbart eine Stoßverbindung für Bewehrungsstäbe in vorgefertigten Betonbauteilen gemäß dem Oberbegriff des Anspruchs 1.

Die DE 1 784 807 A1 offenbart eine Stoßverbindung für exzentrisch angeordnete Bewehrungsstäbe.

Die DE 2 260 817 A1 offenbart eine Vorrichtung zum Verbinden von Bewehrungsstäben gemäß dem Oberbegriff des Anspruchs 3.

Die DE 82 15 261 U 1 offenbart eine Spannmuffe mit einer einschraubbaren Spannmutter.

Die WO 92/08019 A1 offenbart eine selbstspannende Muffenverbindung.

Bewehrungsstäbe werden im Bauwesen eingesetzt, um beispielsweise die Festigkeit einer Betonstruktur zu erhöhen. Derartige Bewehrungsstäbe weisen eine äußere Rippung auf, die insbesondere als Außen-Grobgewinde hergestellt sein kann. Ein derartiges Außen-Grobgewinde ist endlos aufgewalzt. Zur Verbindung von zwei benachbarten Stäben an deren jeweiligen Stabende sind verschiedene Muffensysteme bekannt. Derartige Muffensysteme setzen voraus, dass die miteinander zu verbindenden Stäbe konzentrisch zueinander angeordnet sind. Konzentrisch bedeutet in diesem Zusammenhang, dass Abweichungen der Konzentrizität möglich sind. Derartige Abweichungen können durch das Zusammenwirken des Außen-Grobgewindes des Verbindungsstabs mit einem korrespondierenden Innengewinde ausgeglichen werden. Dies führt jedoch dazu, dass mindestens ein Stab gegenüber dem Muffensystem geneigt angeordnet ist. Diese Neigung ist durch die Ausführung des Stabes und des Muffensystems beschränkt. Die Abweichungen der Konzentrizität, die ausgeglichen werden können, sind gering.

Es ist eine Aufgabe der vorliegenden Erfindung, eine Vorrichtung zum Verbinden von zwei exzentrisch zueinander angeordneten Stäben zu schaffen, wobei die Verbindung der Stäbe zuverlässig und unaufwändig möglich ist.

Diese Aufgabe wird mit einer Vorrichtung mit den im Anspruch 1 genannten Merkmalen gelöst. Der Kern der Erfindung besteht darin, dass eine Spannmutter in eine Spannmuffe derart verbindbar ist, dass ein Spannmutter-Innengewinde-Abschnitt mit einer Spannmutter-Innengewinde-Längsachse mit einer von Null verschiedenen Exzentrizität beabstandet zu einer Spannmuffen-Längsachse angeordnet ist. Insbesondere kann die Spannmutter in die Spannmuffe eingeschraubt werden. Der Spannmutter-Innengewinde-Abschnitt dient zum Einschrauben eines Stabes in die Spannmutter. Die Spannmuffe weist eine Spannmuffen-Innenbohrung auf, die sich entlang der Spannmuffen-Längsachse erstreckt. Die Spannmuffen-Innenbohrung weist einen ersten Spannmuffen-Innengewinde-Abschnitt auf, der zum Einschrauben eines weiteren Stabes dient, der mit dem in die Spannmutter eingeschraubten Stab zu verbinden ist. Insbesondere ist der erste Spannmuffen-Innengewinde-Abschnitt konzentrisch zur Spannmuffen-Längsachse orientiert. Aufgrund der Exzentrizität zwischen der Spannmuffen-Längsachse und der Spannmutter-Innengewinde-Längsachse ist es möglich, zwei benachbarte Stäbe an den jeweiligen Enden miteinander zu verbinden, wenn die Stäbe exzentrisch zueinander angeordnet sind, also wenn die Stäbe entlang ihren jeweiligen Längsachsen nicht miteinander fluchten. Die erfindungsgemäße Vorrichtung ermöglicht, vergleichsweise große Toleranzen zuzulassen bzw. Abweichungen bei der Anordnung der zu verbindenden Stäbe zueinander, die sich aus der Montage der Stäbe zueinander ergeben können, unkompliziert und kostengünstig auszugleichen. Es ist also möglich, bei der Anordnung von zwei miteinander zu verbindenden Stäben Lageabweichungen der jeweiligen Stablängsachsen zuzulassen, um diese anschließend durch die erfindungsgemäße Vorrichtung auszugleichen. Dadurch ist das Verbinden von zwei Stäben vereinfacht und kostengünstig. Die Spannmuffe weist einen zweiten Spannmuffen-Innengewinde-Abschnitt mit einem zweiten Spannmuffen-Gewindedurchmesser auf. Insbesondere ist der zweite Spannmuffen-Innengewinde-Abschnitt konzentrisch zur Spannmuffen-Längsachse orientiert. Der zweite Spannmuffen-Innengewinde-Abschnitt korrespondiert mit einem Spannmutter-Außengewinde-Abschnitt zum Einschrauben der Spannmutter in die Spannmuffe. Der Spannmutter-Außengewinde-Abschnitt weist einen entsprechenden Spannmutter-Außengewindedurchmesser auf. Insbesondere erstreckt sich der Spannmutter-Innengewinde-Abschnitt entlang der gesamten Länge der Spannmutter-Innenbohrung. Das bedeutet, dass die Spannmutter-Innenbohrung eine Spannmutter-Innengewindebohrung ist. Der erste Spannmuffen-Innengewinde-Abschnitt erstreckt sich von einem ersten Muffenende, also ausgehend von einer ersten Stirnseite der Spannmuffe, entlang der Spannmuffen-Längsachse. Entsprechend erstreckt sich der zweite Spannmuffen-Innengewinde-Abschnitt von einer zweiten, der ersten Stirnseite der Spannmuffe gegenüberliegend angeordneten Stirnseite der Spannmuffe entlang der Spannmuffen-Längsachse. Die erfindungsgemäße Vorrichtung stellt also eine Spannmutter zur Verfügung, die eine Exzentrizität bereitstellt, so dass ein in die Spannmutter einzuschraubender Stab gegenüber einer Längsachse der Spannmuffe exzentrisch anordenbar ist.

Bei einer Vorrichtung, bei der die Spannmuffe entlang der Spannmuffen-Längsachse zwischen dem ersten Spannmuffen-Innengewinde-Abschnitt und dem zweiten Spannmuffen-Innengewinde-Abschnitt einen Spannmuffen-Hülsen-Abschnitt aufweist, ist die Verbindung der beiden zu verbindenden Stäbe in der Spannmuffe mit erhöhter Flexibilität möglich. Insbesondere ist das Risiko reduziert, dass die beiden Stabenden im Bereich der Spannmuffe kollidieren. Der Spannmuffen-Hülsen-Abschnitt stellt einen Toleranz-Abschnitt dar, in dem das durch die Spannmutter eingeschraubte Ende eines Verbindungsstabs, exzentrisch zur Spannmuffen-Längsachse, in der Spannmuffe angeordnet werden kann. Der Spannmuffen-Hülsen-Abschnitt ist insbesondere konzentrisch zur Längsachse orientiert und weist einen Spannmuffen-Hülsendurchmesser auf.

Besonders vorteilhaft ist es, wenn der Spannmuffen-Hülsendurchmesser größer ist als der erste Spannmuffen-Gewindedurchmesser.

Bei einer Vorrichtung, bei der der erste Spannmuffen-Innengewinde-Abschnitt ein erstes Grobgewinde mit einer ersten Grobgewindesteigung umfasst, kann besonders vorteilhaft zur Verbindung von Bewehrungsstäben verwendet werden.

Bei einer vorteilhaften Ausgestaltung der Vorrichtung ist der zweite Spannmuffen-Innengewinde-Abschnitt als Regelgewinde, insbesondere als metrisches Regelgewinde, ausgeführt. Das Regelgewinde weist eine Regelgewindesteigung auf. Die Spannmutter weist entsprechend ein Außen-Regelgewinde auf. Die Regelgewinde sind kostengünstig herstellbar. Die Montage der Spannmutter in der Spannmuffe ist vereinfacht und insbesondere unaufwändig herstellbar. Insbesondere ist die Regelgewindesteigung des zweiten Spannmuffen-Innengewinde-Abschnitts kleiner als eine erste Grobgewindesteigung des ersten Grobgewindes des ersten Spannmuffen-Innengewinde-Abschnitts.

Gemäß einer weiteren vorteilhaften Ausgestaltung weist der Spannmutter-Innengewinde-Abschnitt ein zweites Grobgewinde auf mit einer zweiten Grobgewindesteigung. Dadurch ist es möglich, einen Bewehrungsstab in die Spannmutter einzuschrauben. Das zweite Grobgewinde des Spannmutter-Innengewinde-Abschnitts ist identisch ausgeführt zu dem ersten Grobgewinde des ersten Spannmuffen-Innengewinde-Abschnitts. Bei einer derartigen Ausführung können zwei identische, benachbart zueinander angeordnete Bewehrungsstäbe miteinander verbunden werden.

Gemäß einer weiteren vorteilhaften Ausgestaltung weist die Spannmuffe einen Spannmuffen-Werkzeug-Abschnitt auf, der eine senkrecht zur Spannmuffen-Längsachse orientierte unrunde Kontur aufweist. Zusätzlich oder alternativ weist die Spannmutter einen Spannmutter-Werkzeug-Abschnitt auf, der eine senkrecht zur Spannmutter-Längsachse orientierte unrunde Kontur aufweist. Dadurch ist es möglich, die Spannmuffe und/oder die Spannmutter mittels eines Werkzeugs zu betätigen, also um die Spannmuffen-Längsachse bzw. die Spannmutter-Längsachse zu drehen. Die unrunde Kontur kann beispielsweise eine Außensechskant-Kontur sein. Eine derartige Ausgestaltung ist besonders geeignet, um mit an sich bekannten Werkzeugen die Spannmuffe und/oder die Spannmutter zu betätigen. Die Außensechskant-Konturen von Spannmuffe und Spannmutter sind identisch ausgeführt, so dass ein einziges Werkzeug zur Betätigung der Vorrichtung ausreichend ist.

Es ist eine weitere Aufgabe der vorliegenden Erfindung, eine Verbindung von zwei benachbarten Bauelementen zu verbessern, so dass das Verbinden von Stäben der Bauelemente, die insbesondere exzentrisch zueinander angeordnet sind, ermöglicht ist.

Diese Aufgabe ist durch eine Einrichtung zum Verbinden von zwei Bauelementen mit jeweils einem Stab mit den Merkmalen des Anspruchs 8 gelöst. Die Einrichtung weist eine erste Spannmutter und eine zweite Spannmutter auf, die jeweils an gegenüberliegenden Enden eines Verbindungsstabs aufgeschraubt sind. Dazu dient ein erster bzw. zweiter Spannmutter-Innengewinde-Abschnitt, der sich insbesondere jeweils entlang der gesamten Spannmutter-Innenbohrung erstreckt. Der jeweilige Spannmutter-Innengewinde-Abschnitt weist eine Spannmutter-Innengewinde-Längsachse auf, die jeweils mit einer von Null verschiedenen Exzentrizität beabstandet zu einer Spannmutter-Längsachse der Spannmutter angeordnet ist. Die Spannmuttern weisen jeweils einen Spannmutter-Außengewinde-Abschnitt auf, der zum Einschrauben der jeweiligen Spannmutter in eine dazu korrespondierende Spannmuffe dient. Die Spannmuffe kann Bestandteil eines der miteinander zu verbindenden Bauelemente sein. Es ist auch denkbar, dass die jeweilige Spannmuffe zur Verbindung mit dem Bauelement, insbesondere mit einem Stab des Bauelements, dient. Der Spannmutter-Außengewinde-Abschnitt ist jeweils konzentrisch zur Spannmutter-Längsachse orientiert. Die erfindungsgemäße Einrichtung ermöglicht das Verbinden von zwei benachbart angeordneten Bauelementen, die exzentrisch zueinander orientierte Stäbe aufweisen können. Die erfindungsgemäße Einrichtung ermöglicht aber auch das Verbinden von Bauelementen mit konzentrisch zueinander orientierten Stäben. Derartige Bauelemente können insbesondere Fertigteile sein, die beispielsweise abseits einer Baustelle in einem Werk vorgefertigt werden.

Gemäß einer vorteilhaften Ausgestaltung umfasst die Einrichtung eine erste mit der ersten Spannmutter korrespondierende erste Spannmuffe und/oder eine zweite mit der zweiten Spannmutter korrespondierende zweite Spannmuffe. In dieser Ausgestaltung umfasst die Einrichtung also zwei erfindungsgemäße Vorrichtungen, die mittels des Verbindungsstabs miteinander verbunden sind.

Besonders vorteilhaft ist es, wenn mindestens eine der Spannmuffen einen entlang einer Spannmuffen-Längsachse zwischen einem ersten Spannmuffen-Innengewinde-Abschnitt und einem zweiten Spannmuffen-Innengewinde-Abschnitt angeordneten Spannmuffen-Hülsen-Abschnitt aufweist, der eine Spannmuffen-Hülsenlänge aufweist, die mindestens das Zweifache der Gewindesteigung des Außen-Grobgewindes des einzuschraubenden Verbindungsstabs, insbesondere mindestens das Dreifache und insbesondere mindestens das Vierfache, beträgt. Insbesondere ist der Spannmuffen-Hülsen-Abschnitt gewindefrei. Der Spannmuffen-Hülsen-Abschnitt ist insbesondere konzentrisch zur Spannmuffen-Längsachse orientiert.

Gemäß einer weiteren vorteilhaften Ausgestaltung ist das Verbindungsstab-Außengewinde ein Grobgewinde. Ein derartiger Verbindungsstab ist kostengünstig und unproblematisch verfügbar. Ein Verbindungsstab kann beispielsweise ein Bewehrungsstab sein. Das Grobgewinde entlang der Verbindungsstab-Längsachse ist durchgängig. Dadurch ist die Montage des Verbindungsstabs an den Spannmuttern unkompliziert möglich.

Gemäß einer weiteren vorteilhaften Ausgestaltung sind die beiden Spannmuttern identisch zueinander ausgeführt. Es ist auch denkbar, dass die Spannmuttern abweichend voneinander ausgeführt sind. Insbesondere kann eine erste Exzentrizität der ersten Spannmutter von der zweiten Exzentrizität der zweiten Spannmutter abweichen.

Gemäß einer weiteren vorteilhaften Ausgestaltung ist die erste Spannmutter an einem ersten Ende auf dem Verbindungsstab und die zweite Spannmutter an einem zweiten, dem ersten Ende gegenüberliegend angeordneten Ende auf den Verbindungsstab aufgeschraubt. Dadurch ist eine Verbindung von zwei Stabenden von zwei benachbarten Bauelementen vereinfacht.

Bei einer weiteren vorteilhaften Ausgestaltung, bei der die Verbindungsstab-Längsachse in einem, insbesondere von Null verschiedenen, Neigungswinkel gegenüber der ersten Spannmutter-Längsachse und/oder gegenüber der zweiten Spannmutter-Längsachse angeordnet ist, ist die Flexibilität der Einrichtung zusätzlich erhöht. Der Neigungswinkel kann dabei höchstens 1,2°, insbesondere höchstens 1,1° und insbesondere höchstens 1,0° betragen. Insbesondere ist es möglich, zwei benachbarte Bauelemente miteinander zu verbinden, deren Anordnung eine Exzentrizität aufweist, die größer ist als die Summe der Einzel-Exzentrizitäten der Spannmuttern, so dass ein Ausgleich allein durch die Summe der Einzel-Exzentrizitäten der Spannmuttern nicht mehr möglich wäre.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine erfindungsgemäße Vorrichtung, die zwei exzentrisch zueinander angeordnete Stäbe miteinander verbindet,
- Fig. 2: eine Fig. 1 entsprechende, vergrößerte Halbschnitt-Darstellung einer erfindungsgemäßen Vorrichtung gemäß einer weiteren Ausführungsform,
- Fig. 3: eine Darstellung gemäß Ansicht entsprechend Pfeil III in Fig. 2,
- Fig. 4: eine Fig. 2 entsprechende Darstellung einer Spannmutter,
- Fig. 5: eine Ansicht gemäß Pfeil V in Fig. 4,
- Fig. 6: eine Fig. 2 entsprechende Darstellung der Spannmuffe,
- Fig. 7: eine Ansicht gemäß Pfeil VII in Fig. 6,
- Fig. 8: eine Fig. 2 entsprechende Darstellung der erfindungsgemäßen Vorrichtung gemäß einer weiteren Ausführungsform,
- Fig. 9 bis Fig. 12: eine Stadienabfolge für die Montage der erfindungs gemäßen Vorrichtung zum Verbinden von zwei exzentrisch zueinander angeordneten Stäben,
- Fig. 13: eine Einrichtung zum Verbinden von zwei benachbarten Bauelementen mit jeweils einem Stab in einer ersten Anordnung,
- Fig. 14: die Einrichtung gemäß Fig. 13 in einer davon abweichenden Anordnung,
- Fig. 15: eine Fig. 14 entsprechende Darstellung einer Einrichtung gemäß einer weiteren Ausführungsform und
- Fig. 16 bis Fig. 18: schematische Darstellungen möglicher Anordnungen der erfindungsgemäßen Einrichtung.

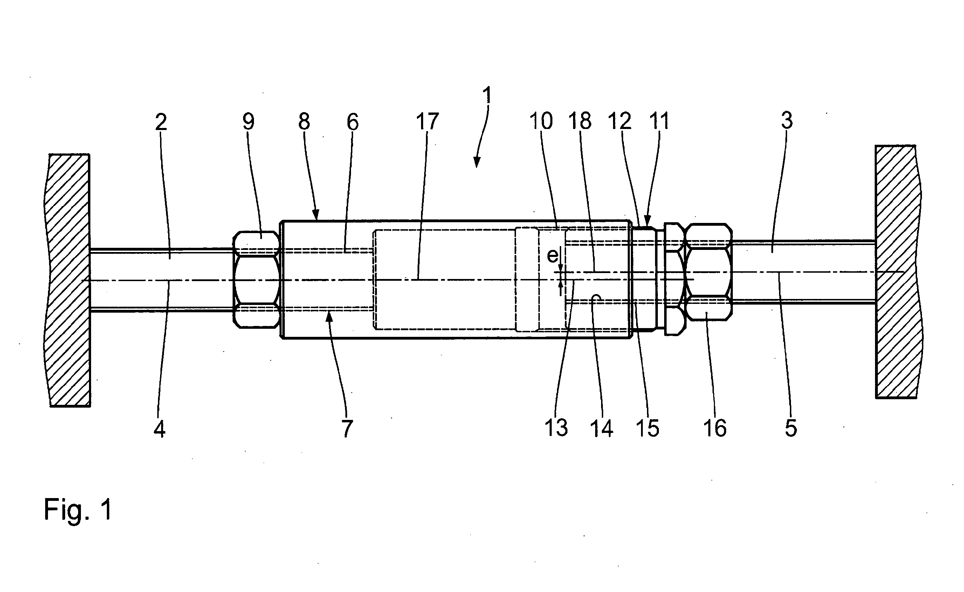

Eine in Fig. 1 als Ganzes mit 1 bezeichnete Vorrichtung dient zum Verbinden eines ersten, in Fig. 1 links dargestellten Stabes 2 mit einem in Fig. 1 rechts dargestellten zweiten Stab 3. Die Stäbe 2, 3 sind jeweils als Bewehrungsstäbe ausgeführt. Die Stäbe 2, 3 weisen jeweils ein Außen-Grobgewinde auf, das endlos aufgewalzt ist. Insbesondere ist das Außen-Grobgewinde von den jeweiligen Stirnseiten der Stäbe 2, 3, also von zwei Seiten, aufgewalzt. Die Stäbe 2, 3 können am Außendurchmesser mindestens eine Abflachung und zwei parallel zueinander angeordnete, abgeflachte Flächen aufweisen, damit die Stäbe 2, 3 jeweils mittels eines Werkzeugs gehandhabt, um eine jeweilige Stab-Längsachse 4, 5 gedreht werden können. Die Stäbe 2, 3 sind exzentrisch zueinander angeordnet, d. h. die erste Stablängsachse 4 und die zweite Stablängsachse 5 sind beabstandet zueinander angeordnet. Insbesondere sind die beiden Stablängsachsen 4, 5 parallel zueinander angeordnet.

Der erste Stab 2 ist in einen ersten Spannmuffen-Innengewinde-Abschnitt 6 einer Spannmuffen-Innenbohrung 7 einer Spannmuffe 8 eingeschraubt. Der erste Spannmuffen-Innengewinde-Abschnitt 6 korrespondiert mit dem Grobgewinde des ersten Stabs 2. Auf dem ersten Stab 2 ist an der Spannmuffe 8 eine erste Kontermutter 9vorgesehen. Insbesondere wird die erste Kontermutter 9 mit einem definierten Anzugs-Drehmoment an der Spannmuffe 8 festgezogen. Das definierte Anzugs-Drehmoment kann sich aus sicherheitsrelevanten Kriterien ergeben. Insbesondere dienen diese Kriterien der Vermeidung eines definierten Schlupfmaßes.

In einem zweiten Spannmuffen-Innengewinde-Abschnitt 10 ist eine Spannmutter 11 mit einem korrespondierenden Spannmutter-Außengewinde-Abschnitt 12 in die Spannmuffe 8 eingeschraubt. Die Spannmutter 11 weist eine entlang einer Spannmutter-Längsachse 13 verlaufende Spannmutter-Innenbohrung 14 auf, in der ein Spannmutter-Innengewinde-Abschnitt 15 vorgesehen ist. In den Spannmutter-Innengewinde-Abschnitt 15 der Spannmutter 11 ist der zweite Stab 3 eingeschraubt. Eine zweite Kontermutter 16 ist für den zweiten Stab 3 an der Vorrichtung 1, insbesondere an der Spannmutter 11, analog der ersten Kontermutter 9 vorgesehen.

In der in Fig. 1 gezeigten Anordnung ist die erste Stablängsachse 4 konzentrisch zu einer Spannmuffen-Längsachse 17 orientiert. Die zweite Stablängsachse 5 ist konzentrisch zur Spannmutter-Längsachse 13 orientiert. Der erste Spannmuffen-Innengewinde-Abschnitt 6 und der zweite Spannmuffen-Innengewinde-Abschnitt 10 sind jeweils konzentrisch zur Spannmuffen-Längsachse 17 orientiert. Der Spannmutter-Außengewinde-Abschnitt 12 ist konzentrisch zur Spannmutter-Längsachse 13 orientiert. Der Spannmutter-Innengewinde-Abschnitt 15 weist eine Spannmutter-Innengewinde-Längsachse 18 auf, die in dem in Fig. 1 dargestellten eingeschraubten Zustand der Spannmutter 11 in die Spannmuffe 8 mit einer von Null verschiedenen Exzentrizität e beabstandet zur Spanmnuffen-Längsachse 17 angeordnet ist. Die Exzentrizität e entspricht dem Abstand der Spannmutter-Innengewinde-Längsachse 18 von der Spannmutter-Längsachse 13. Die Spannmutter-Längsachse 13 und die Spannmuffen-Längsachse 17 sind konzentrisch zueinander angeordnet.

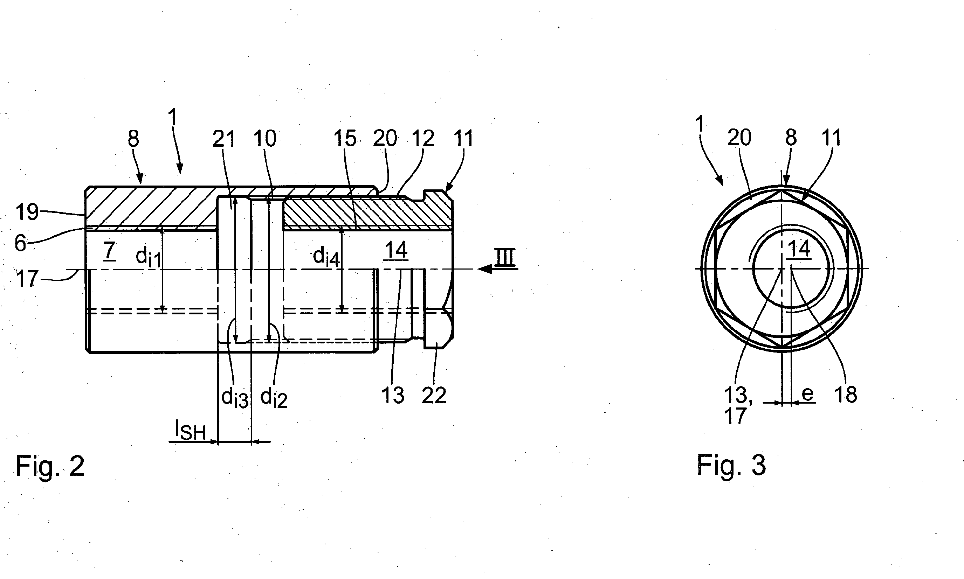

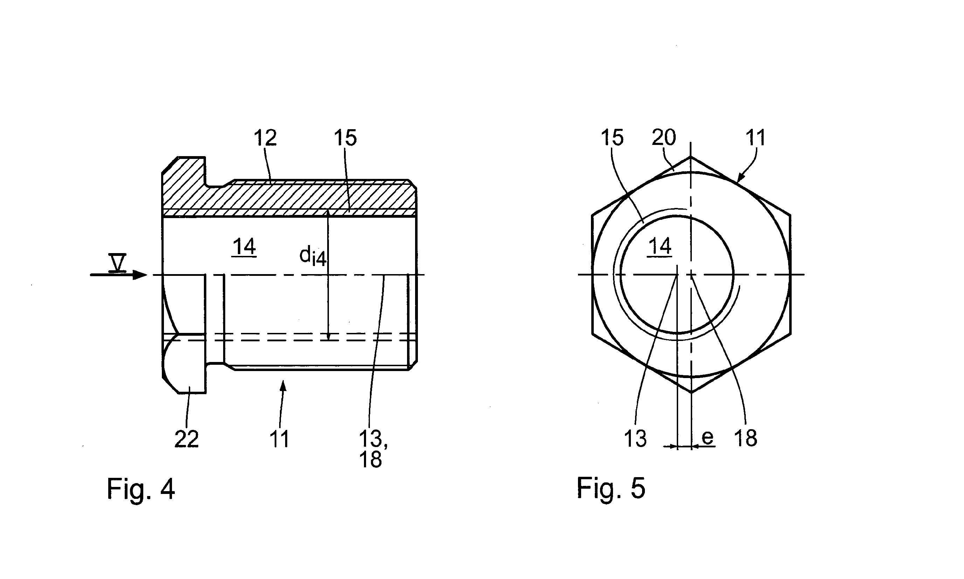

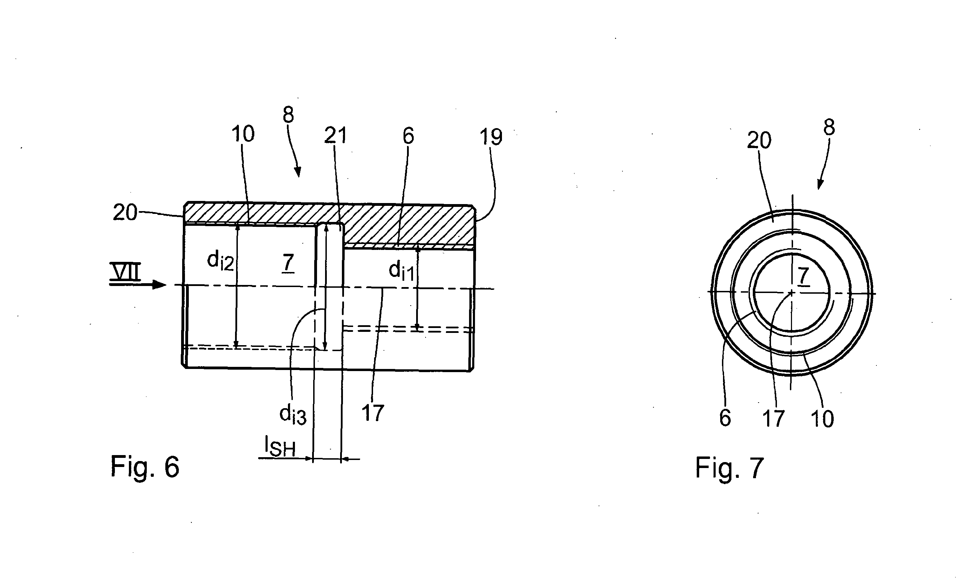

Im Folgenden wird anhand der Fig. 2 bis 7 die Vorrichtung 1 näher erläutert. Die Vorrichtung 1 umfasst die Spannmuffe 8 und die darin eingeschraubte Spannmutter 11. Die Spannmuffe 8 weist entlang der Spannmuffen-Längsachse 17 die Spannmuffen-Innenbohrung 7 auf.

Ausgehend von einer ersten, in Fig. 2 links dargestellten Stirnseite 19 der Spannmuffe 8 erstreckt sich der erste Spannmuffen-Innengewinde-Abschnitt 6, der zum Einschrauben des ersten Stabes 2 in die Spannmuffe 8 dient. Der erste Spannmuffen-Innengewinde-Abschnitt 6 weist einen ersten Spannmuffen-Gewindedurchmesser dᵢ₁ auf. Der erste Spannmuffen-Innengewinde-Abschnitt 6 ist konzentrisch zur Spannmuffen-Längsachse 17 orientiert. Die Spannmuffen-Innenbohrung 7 weist weiterhin den zweiten Spannmuffen-Innengewinde-Abschnitt 10 auf, der sich ausgehend von einer zweiten Stirnseite 20 der Spannmuffe 8 entlang der und konzentrisch zu der Spannmuffen-Längsachse 17 erstreckt. Der zweite Spannmuffen-Innengewinde-Abschnitt 10 weist einen zweiten Spannmuffen-Gewindedurchmesser dᵢ₂ auf. Der zweite Spannmuffen-Gewindedurchmesser dᵢ₂ ist größer als der erste Spannmuffen-Gewindedurchmesser dᵢ₁. Es gilt: dᵢ₂ > dᵢ₁, insbesondere dᵢ₂ > 1,5 · dᵢ₁.

Gemäß dem gezeigten Ausführungsbeispiel ist der erste Spannmuffen-Innengewinde-Abschnitt 6 als erstes Grobgewinde ausgeführt. Das erste Grobgewinde weist eine erste Grobgewindesteigung auf.

Der zweite Spannmuffen-Innengewinde-Abschnitt 10 ist gemäß dem gezeigten Ausführungsbeispiel als metrisches Regelgewinde ausgeführt. Das metrische Regelgewinde umfasst eine Regelgewindesteigung. Die Regelgewindesteigung ist kleiner als die erste Grobgewindesteigung des ersten Grobgewindes des ersten Spannmuffen-Innengewinde-Abschnitts 6. Entlang der Spannmuffen-Längsachse 17 ist zwischen dem ersten Spannmuffen-Innengewinde-Abschnitt 6 und dem zweiten Spannmuffen-Innengewinde-Abschnitt 10 ein Spannmuffen-Hülsen-Abschnitt 21 angeordnet. Der Spannmuffen-Hülsen-Abschnitt 21 ist gewindefrei. Der Spannmuffen-Hülsen-Abschnitt 21 ist konzentrisch zur Spannmuffen-Längsachse 17 angeordnet. Der Spannmuffen-Hülsen-Abschnitt 21 weist einen Spannmuffen-Hülsendurchmesser dᵢ₃ auf, der größer ist als der erste Spannmuffen-Gewindedurchmesser dᵢ₁. Insbesondere gilt: dᵢ₃ > dᵢ₁, insbesondere dᵢ₃ > 1,5 · dᵢ₁. Der Spannmuffen-Hülsendurchmesser dᵢ₃ entspricht im Wesentlichen dem zweiten Spannmuffen-Gewindedurchmesser dᵢ₂. Insbesondere ist der Spannmuffen-Hülsendurchmesser dᵢ₃ identisch zu einem Kerndurchmesser des zweiten Spannmuffen-Innengewinde-Abschnitt 10. Der Kerndurchmesser des zweiten Spannmuffen-Innengewinde-Abschnitts ist geringfügig kleiner als der zweite Spannmuffen-Gewindedurchmesser dᵢ₂. Entlang der Spannmuffen-Längsachse 17 weist der Spannmuffen-Hülsen-Abschnitt 21 eine Spannmuffen-Hülsenlänge l_{SH} auf.

Die Spannmutter 11 ist in die Spannmuffe 8 eingeschraubt. Das bedeutet, dass die Spannmutter 11 lösbar mit der Spannmuffe 8 verbunden ist. Die Spannmutter 11 kann gegenüber der Spannmuffe 8 gewechselt werden. Die Spannmutter 11 wird auch als Wechselstück bezeichnet. Es ist insbesondere denkbar, zu einer Spannmuffe 8 mehrere Spannmuttern 11 bereitzustellen, wobei die Spannmuttern 11 jeweils voneinander verschiedene Exzentrizitäten e aufweisen. Dadurch ist es möglich, mittels einer Spannmuffe 8 verschieden große, insbesondere vorher nicht bekannte Exzentrizitäten von zueinander angeordneten Stäben auszugleichen.

Die Spannmutter 11 weist eine Spannmutter-Längsachse 13 auf, entlang der eine Spannmutter-Innenbohrung 14 verläuft. Die Spannmutter 11 weist den Spannmutter-Außengewinde-Abschnitt 12 auf. Der Spannmutter-Außengewinde-Abschnitt 12 korrespondiert mit dem zweiten Spannmuffen-Innengewinde-Abschnitt 10 zum Einschrauben der Spannmutter 11 in die Spannmuffe 8. Das bedeutet, dass gemäß dem gezeigten Ausführungsbeispiel der Spannmutter-Außengewinde-Abschnitt 12 als metrisches Regelgewinde ausgeführt ist. Der Spannmutter-Außengewinde-Abschnitt 12 weist einen Spannmutter-Außengewinde-Durchmesser auf, der mit dem zweiten Spannmuffen-Gewindedurchmesser dᵢ₂ korrespondiert. Der Spannmutter-Außengewinde-Abschnitt 12 ist konzentrisch zur Spannmutter-Längsachse 13 orientiert.

Die Spannmutter 11 weist weiterhin den in der Spannmutter-Innenbohrung 14 angeordneten Spannmutter-Innengewinde-Abschnitt 15 auf. Der Spannmutter-Innengewinde-Abschnitt 15 erstreckt sich entlang der gesamten Länge der Spannmutter-Innenbohrung 14. Der Spannmutter-Innengewinde-Abschnitt 15 ist als zweites Grobgewinde ausgeführt und dient zum Einschrauben des zweiten Stabes 3 in die Vorrichtung 1, insbesondere in die Spannmutter 11. Das zweite Grobgewinde umfasst eine zweite Grobgewindesteigung. Gemäß dem gezeigten Ausführungsbeispiel sind die beiden Grobgewinde des ersten Spannmuffen-Innengewinde-Abschnitts 6 und des Spannmutter-Innengewinde-Abschnitts 15 identisch ausgeführt und weisen identische Grobgewindesteigungen und identische Gewindedurchmesser dᵢ₁ auf.

Es ist denkbar, dass die Grobgewinde unterschiedlich ausgeführt sind, um Stäbe 2, 3 miteinander zu verbinden, die unterschiedliche Außendurchmesser und/oder unterschiedliche Gewindesteigungen aufweisen. Die Ausfuhrung der Grobgewinde des ersten Spannmuffen-Innengewinde-Abschnitts 6 und des Spannmutter-Innengewinde-Abschnitts 15 sind voneinander unabhängig. Die Ausgestaltung der jeweiligen Grobgewinde hängt vielmehr von dem einzuschraubenden Stab 2, 3 ab.

Der Spannmutter-Innengewinde-Abschnitt 15 weist einen Spannmutter-Innengewindedurchmesser dᵢ₄ auf, der gemäß dem gezeigten Ausführungsbeispiel identisch ist mit dem ersten Spannmuffen-Gewindedurchmesser. Es gilt: dᵢ₁ = dᵢ₄. Der Spannmutter-Innengewinde-Abschnitt 15 weist eine Spannmutter-Innengewinde-Längsachse 18 auf. In dem montierten Zustand der Vorrichtung 1, also in dem eingeschraubten Zustand der Spannmutter 11 in der Spannmuffe 8, sind die Spannmutter-Längsachse 13 und die Spannmuffen-Längsachse 17 konzentrisch zueinander angeordnet. Die Spannmutter-Innengewinde-Längsachse 18 ist mit einer von Null verschiedenen Exzentrizität e beabstandet zur Spannmuffen-Längsachse 17 angeordnet.

Die Exzentrizität e beträgt insbesondere mindestens 0,1 · dᵢ₁, insbesondere 0,2 · dᵢ₁ und insbesondere 0,25 · dᵢ₁.

Die Spannmutter weist einen Spannmutter-Werkzeug-Abschnitt 22 auf, der senkrecht zur Spannmutter-Längsachse 13 eine unrunde Kontur in Form eines Sechskant-Profils aufweist. Eine derartige Außensechskantform ist besonders geeignet, um mittels eines Werkzeugs, insbesondere eines Gabelschlüssels, betätigt zu werden. Die Handhabung und/oder Betätigung der Spannmutter 11 an der Spannmuffe 8 ist dadurch vereinfacht. Es ist auch denkbar, dass die Spannmuffe 8 einen entsprechenden, in Fig. 2, 3 nicht dargestellten Spannmuffen-Werkzeug-Abschnitt aufweist.

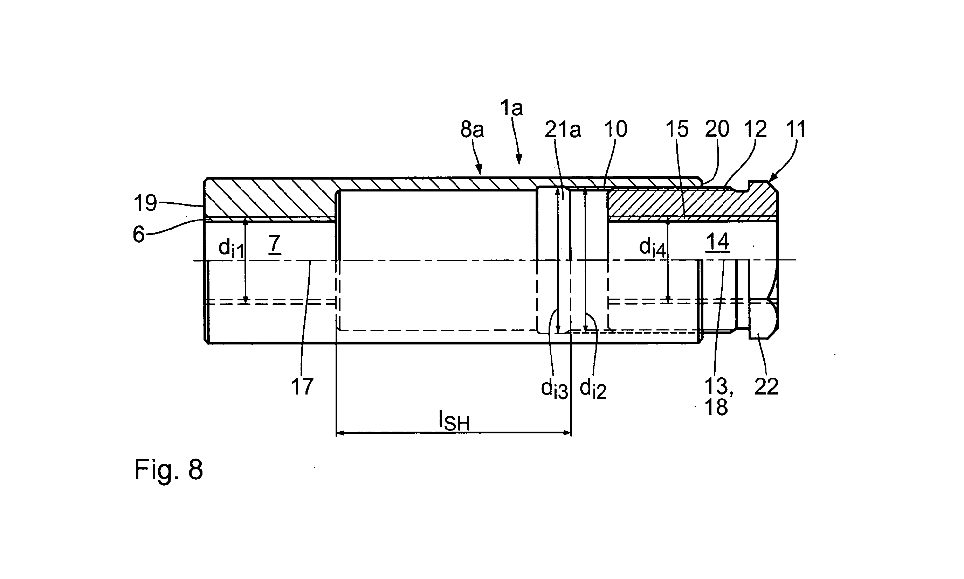

Im Folgenden wird unter Bezugnahme auf die Fig. 8 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein wesentlicher Unterschied gegenüber dem ersten Ausführungsbeispiel besteht darin, dass der Spannmuffen-Hülsen-Abschnitt 21a eine entlang der Spannmuffen-Längsachse 17 vergrößerte Spannmuffen-Hülsenlänge l_{SH} aufweist.

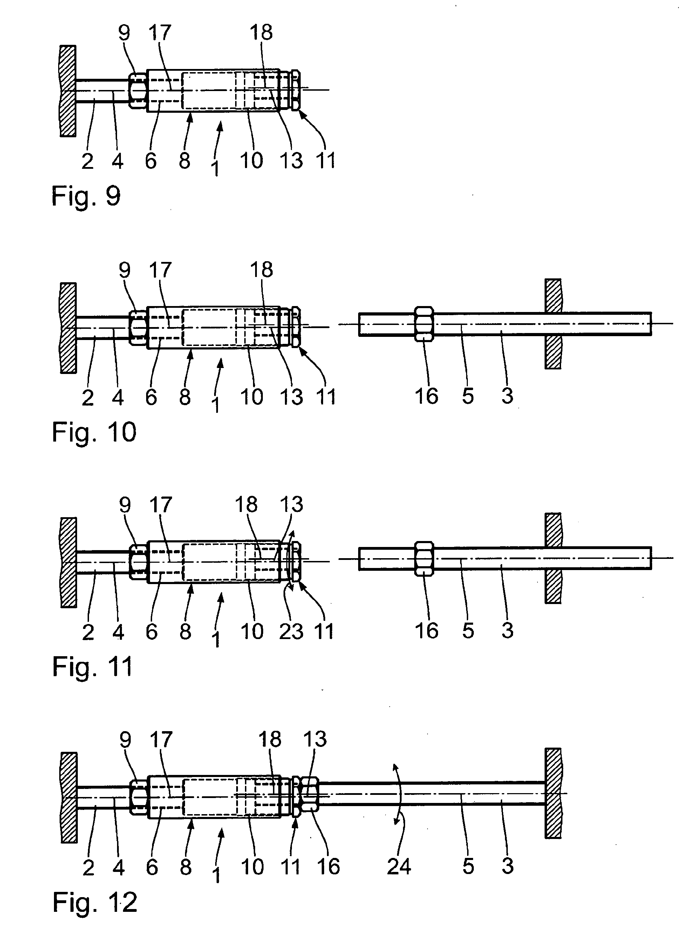

Im Folgenden wird anhand der Fig. 9 bis 12 die Montage der erfindungsgemäßen Vorrichtung 1 zum Verbinden eines ersten Stabs 2 mit einem zweiten Stab 3 näher erläutert. In einer Ausgangssituation gemäß Fig. 9 ist auf einen ersten Stab 2 die Spannmuffe 8 der Vorrichtung 1 am ersten Spannmuffen-Innengewinde-Abschnitt 6 aufgeschraubt. Mittels der ersten Kontermutter 9 ist der erste Stab 2 in der Spannmuffe 8 gehalten. In der Spannmuffe 8 ist die Spannmutter 11 am zweiten Spannmuffen-Innengewinde-Abschnitt 10 eingeschraubt. Der zweite Stab 3 soll mit dem ersten Stab 2 über die Vorrichtung 1 verbunden werden. Auf den zweiten Stab 2 ist die zweite Kontermutter 16 zum Halten des zweiten Stabs 3 in der Spannmutter 11 der Vorrichtung 1 bereits montiert. Der zweite Stab 3 wird an die Vorrichtung 1 herangeführt. Das Heranführen ist erforderlich, da die miteinander zu verbindenden Bauteile, insbesondere die Stäbe 2, 3 in einer definierten Lage oder in einer Zwangslage angeordnet sind. Die definierte Lage ergibt sich beispielsweise durch einen Abstand von zwei miteinander zu verbindenden Fertig-Bauteilen. Eine Zwangslage kann sich beispielsweise daraus ergeben, falls miteinander zu verbindende Stäbe exzentrisch zueinander, unveränderbar beispielsweise durch Einbetonieren zueinander angeordnet sind.

Der zweite Stab 3 ist gemäß der Anordnung in Fig. 9 bis 12 entlang der zweiten Stablängsachse 5 nicht längs verschiebbar angeordnet. Der zweite Stab 3 ist aber um die zweite Stablängsachse 5 drehbar. Dadurch ist es möglich, dass er aus einem nicht näher dargestellten Gewinde des in Fig. 10 rechts dargestellten Fertig-Bauteils nach links herausgeschraubt werden kann. Insbesondere ist dazu eine Muffe in dem Fertig-Bauteil fixiert, beispielsweise durch Einbetonieren.

Der zweite Stab 3 ist mit seiner zweiten Stablängsachse 5 exzentrisch zur ersten Stablängsachse 4 des ersten Stabs 2 angeordnet. Insbesondere ist die zweite Stablängsachse 5 des zweiten Stabs 3 exzentrisch zur Spannmutter-Innengewinde-Längsachse 18 der Spannmutter 11 angeordnet.

Durch Ein- bzw. Ausschrauben der Spannmutter 11 gegenüber der Spannmuffe 8 wird die Spannmutter-Innengewinde-Längsachse 18 auf einer Kreisbahn mit dem Radius gemäß der Exzentrizität e um die Spannmuffen-Längsachse 17 bewegt. Da der erste Spannmuffen-Innengewinde-Abschnitt 6 und der zweite Spannmuffen-Innengewinde-Abschnitt 10 jeweils konzentrisch zur Spannmuffen-Längsachse 17 angeordnet sind, ist auch der erste Stab 2 mit der ersten Stablängsachse 4 konzentrisch zur Spannmuffen-Längsachse 17 angeordnet. Das bedeutet, dass das Ein- bzw. Ausschrauben der Spannmutter 11 gegenüber der Spannmuffe 8 zu einer Relativverlagerung der Spannmutter-Innengewinde-Längsachse 18 gegenüber der ersten Stablängsachse 4 führt. Die Ein- bzw. Ausschraubbewegung der Spannmutter 11 ist in Fig. 11 durch den Doppelpfeil 23 dargestellt. Die Ein-/Ausschraubbewegung gemäß Pfeil 23 dient dem Justieren der Vorrichtung 1, die ein exzentrisches Spannschloss darstellt, in eine geforderte exzentrische Lage.

Es ist denkbar, dass in der justierten Anordnung, in der die Spannmutter-Innengewinde-Längsachse 18 konzentrisch zur zweiten Stablängsachse 5 des zweiten Stabs 3 angeordnet ist, ein Einschrauben des zweiten Stabes 3 in die Spannmutter 11 nicht möglich ist, da ein Eingriff des Grobgewindes des zweiten Stabs 3 nicht mit der Anordnung des Spannmutter-Innengewinde-Abschnitts 15 korrespondiert. Ausgehend von der justierten Anordnung, in der die Längsachsen 5, 18 fluchten, wird die Spannmutter 11 jeweils um 360° um die Spannmutter-Längsachse 13 in die Spannmuffe 8 hinein oder aus der Spannmuffe 8 heraus geschraubt. Diese axiale Justage erfolgt solange, bis die axiale Position des Grobgewindes des zweiten Stabs 3 auf die axiale Position des Spannmutter-Innengewinde-Abschnitts 15 abgestimmt ist. Diese Axial-Justage ermöglicht es, die unterschiedlichen Gewindesteigungen des metrischen Regelgewindes des Spannmutter-Außengewinde-Abschnitts einerseits und des Grobgewindes des Spannmutter-Innengewinde-Abschnitts 15 andererseits auszugleichen.

Sobald die Spannmutter 11 in einer Drehrichtung um die Spannmutter-Längsachse 13 und in einer axialen Richtung bezogen auf den zweiten Stab 3 justiert ist, wird der zweite Stab 3 durch eine Drehbewegung gemäß Pfeil 24 in Fig. 12 in den Spannmutter-Innengewinde-Abschnitt 15 der Spannmutter 11 eingeschraubt. Mittels der zweiten Kontermutter 16 wird der zweite Stab 3 an der Spannmutter 11 gehalten.

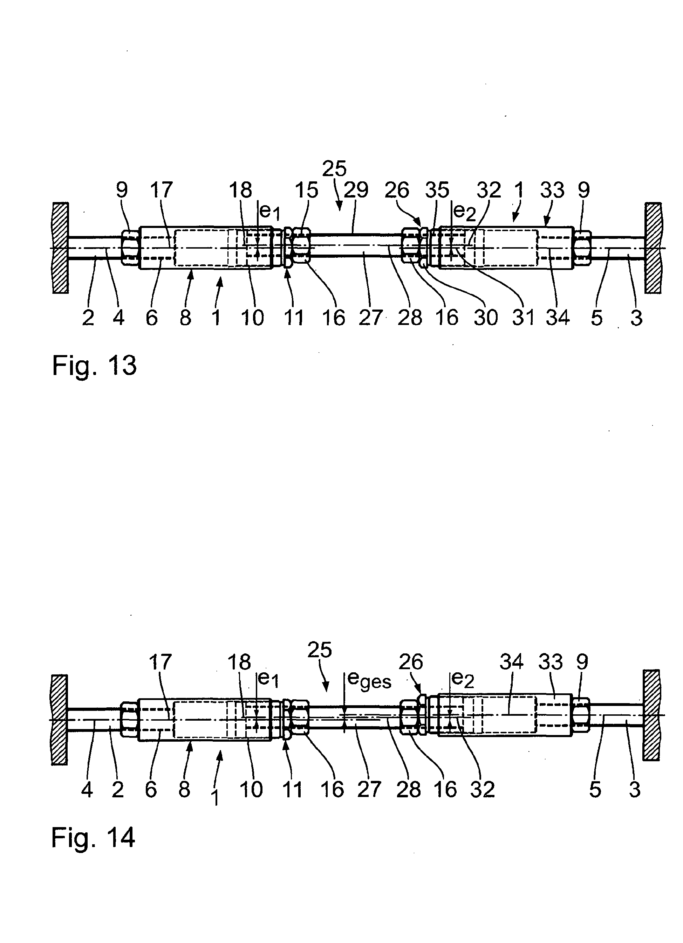

Im Folgenden wird unter Bezugnahme auf die Fig. 13 und 14 eine erfindungsgemäße Einrichtung beschrieben. Konstruktiv identische Teile erhalten dieselben Bezugszeichen wie bei den beiden ersten Ausführungsbeispielen, auf deren Beschreibung hiermit verwiesen wird.

Ein wesentlicher Unterschied besteht darin, dass die Einrichtung 25 eine erste Spannmutter 11 und eine zweite Spannmutter 26 aufweist, die mittels eines Verbindungsstabs 27 miteinander verbunden sind. Der Verbindungsstab 27 weist eine Verbindungsstab-Längsachse 28 sowie ein Verbindungsstab-Außengewinde 29 auf. Das Verbindungsstab-Außengewinde 29 dient zum Einschrauben in einen ersten Spannmutter-Innengewinde-Abschnitt 15 der ersten Spannmutter 11 und in einen zweiten Spannmutter-Innengewinde-Abschnitt 35 der zweiten Spannmutter 26. Die Spannmuttern 11, 26 sind insbesondere identisch ausgeführt und spiegelbildlich zueinander am Verbindungsstab 27 angeordnet. Das bedeutet, dass die Spannmuttern 11, 26 mit ihrem jeweiligen Spannmutter-Werkzeug-Abschnitt 22, 30 einander zugewandt orientiert sind. Die beiden Spannmuttern 11, 26 sind jeweils durch eine zweite Kontermutter 16 gehalten.

Gemäß der in Fig. 13 gezeigten Anordnung sind die erste Spannmutter 11 mit der ersten Spannmutter-Innengewinde-Längsachse 18, der Verbindungsstab 27 mit der Verbindungsstab-Längsachse 28 und die zweite Spannmutter 26 mit der zweiten Spannmutter-Innengewinde-Längsachse 32 konzentrisch zueinander angeordnet. Die genannten Längsachsen 18, 28, 32 sind gegenüber der ersten Stablängsachse 4 des in Fig. 13 links dargestellten ersten Stabs 2 einerseits und gegenüber der zweiten Stablängsachse 5 des zweiten Stabs 3, der in Fig. 13 rechts dargestellt ist, nach oben versetzt angeordnet. Insbesondere sind die beiden Stablängsachsen 4, 5 konzentrisch zueinander angeordnet. Dadurch, dass die Spannmutter 11 eine erste Exzentrizität e₁ und die zweite Spannmutter 26 eine zweite Exzentrizität e₂ aufweisen, die identisch sind, kompensieren sich die Exzentrizitäten e₁, e₂ bei gegensätzlicher Anordnung, so dass die erfindungsgemäße Einrichtung 25 die Verbindung der Stäbe 2, 3, die auch konzentrisch zueinander angeordnet sein können, ermöglicht.

Die zweite Spannmutter 26 umfasst eine entlang der zweiten Spannmutter-Längsachse 31 verlaufende zweite Spannmutter-Innenbohrung. Entlang der zweiten Spannmutter-Innenbohrung erstreckt sich der zweite Spannmutter-Innengewinde-Abschnitt 35, der als metrisches Regelgewinde ausgeführt ist und einen zweiten Spannmutter-Innengewindedurchmesser aufweist. Das metrische Regelgewinde weist zudem eine zweite Spannmutter-Innengewinde-Längsachse 32 auf. Die zweite Spannmutter-Innengewinde-Längsachse 32 ist mit einer von Null verschiedenen zweiten Exzentrizität e₂ beabstandet zur zweiten Spannmutter-Längsachse 31 angeordnet.

Die zweite Spannmutter 26 umfasst zudem einen zweiten Spannmutter-Außengewinde-Abschnitt, um die zweite Spannmutter 26 in eine korrespondierende zweite Spannmuffe 33 einschrauben zu können. Entsprechend ist die erste Spannmutter 11 in eine erste Spannmuffe 8 eingeschraubt. Die Spannmuffen 8, 33 sind jeweils an einem der Spannmuttern 11, 26 abgewandten Ende mit einer ersten Kontermutter 9 gesichert. Gemäß der Darstellung in Fig. 13 umfasst die Einrichtung 25 auch die beiden Spannmuffen 8, 33. Es ist auch denkbar, dass die Einrichtung 25 nur eine der beiden Spannmuffen 8, 33 oder keine der Spannmuffen 8, 33 umfasst.

Die erste Stablängsachse 4 ist konzentrisch zur ersten Spannmuffen-Längsachse 17 orientiert. Die zweite Stablängsachse 5 ist konzentrisch zur zweiten Spannmuffen-Längsachse 34 orientiert. Dadurch, dass die beiden Stablängsachsen 4, 5 konzentrisch zueinander orientiert sind, sind auch die beiden Spannmuffen-Längsachsen 17, 34 konzentrisch zueinander orientiert. Im Folgenden wird unter Bezugnahme auf Fig. 14 ein zweites Ausführungsbeispiel der erfindungsgemäßen Einrichtung beschrieben. Konstruktiv identische Teile erhalten dieselben Bezugszeichen wie bei dem ersten Ausführungsbeispiel, auf dessen Beschreibung hiermit verwiesen wird.

Wesentlicher und einziger Unterschied ist die Anordnung der Einrichtung 25 zwischen den beiden Stäben 2, 3. Die Anordnung der Einrichtung 25 ergibt sich aus der Einbausituation der beiden Stäbe 2, 3. Entgegen der Anordnung in Fig. 13, in der die Stäbe 2, 3 konzentrisch zueinander ausgerichtet sind, weisen die Stäbe 2, 3 in der Anordnung gemäß Fig. 14 eine Exzentrizität zueinander auf, indem der rechts dargestellte Stab 3 gegenüber dem links dargestellten Stab 2 nach oben versetzt ist. Dieser Versatz nach oben wird durch die erste Exzentrizität e₁ und die zweite Exzentrizität e₂ kompensiert. Dabei sind die Spannmuttern 11, 26 an den jeweils korrespondierenden Spannmuffen 8, 33 jeweils derart justiert, dass die Exzentrizitäten e₁, e₂ sich maximal addieren. Das bedeutet, dass die erste Spannmutter 11 an der ersten Spannmuffe 8 analog der Einbausituation gemäß Fig. 13 nach oben justiert ist. Das bedeutet, dass die erste Spannmutter-Innengewinde-Längsachse 18 gegenüber der ersten Spannmuffen-Längsachse 17 um die Exzentrizität e₁ nach oben versetzt ist. Die zweite Spannmutter 26 ist in der zweiten Spannmuffe 33 derart justiert, dass die zweite Spannmutter-Innengewinde-Längsachse 32 gegenüber der zweiten Spannmuffen-Längsachse 34 um die Exzentrizität e₂ nach unten versetzt ist. Die durch die Einrichtung 25 in der in Fig. 14 dargestellten Anordnung weist eine Gesamt-Exzentrizität e_{ges} auf, die der Summe der ersten Exzentrizität e₁ und der zweiten Exzentrizität e₂ entspricht. In der Anordnung gemäß Fig. 14 gilt: e_{ges} = e₁ + e₂.

Im Folgenden wird unter Bezugnahme auf Fig. 14 ein drittes Ausführungsbeispiel der erfindungsgemäßen Einrichtung beschrieben. Konstruktiv identische Teile erhalten dieselben Bezugszeichen wie bei den beiden ersten Ausführungsbeispielen, auf deren Beschreibung hiermit verwiesen wird.

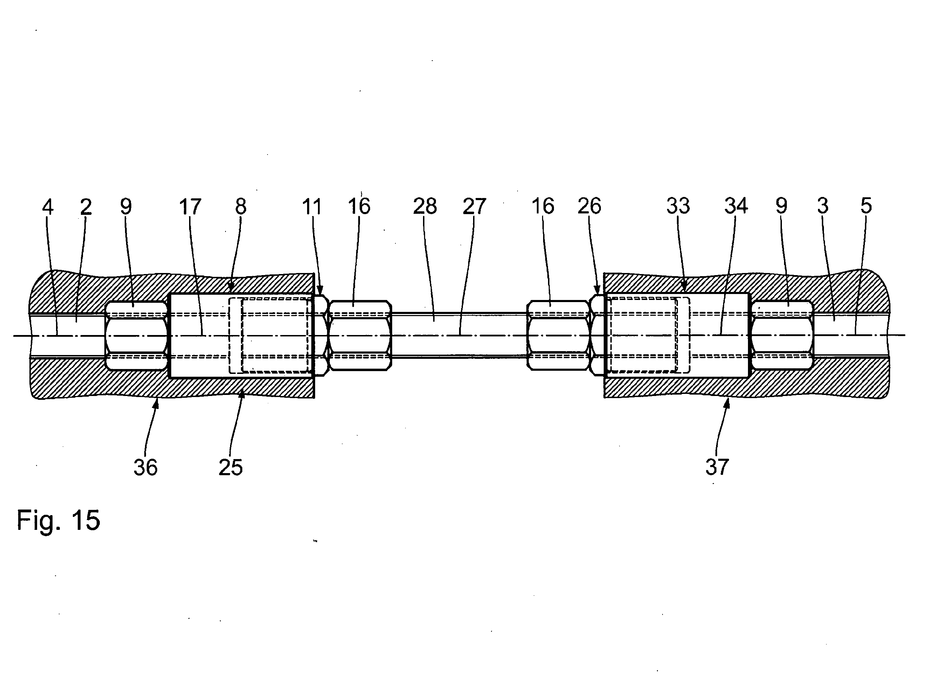

Wesentlicher Unterschied gegenüber den beiden ersten Ausführungsbeispielen ist, das bei der Einrichtung 25 die Stäbe 2, 3 jeweils in eine Spannmuffe 8, 33 eingeschraubt sind. Die in Fig. 15 links dargestellte erste Spannmuffe 8 entspricht im Wesentlichen der in Fig. 2 dargestellten Spannmuffe 8 und weist eine vergleichsweise reduzierte Spannmuffen-Hülsenlänge l_{SH} auf. Die in Fig. 15 rechts dargestellte zweite Spannmuffe 33 entspricht im Wesentlichen der in Fig. 8 dargestellten Spannmuffe 8a mit einer vergleichsweise großen Spannmuffen-Hülsenlänge l_{SH}. Der zwischen den Spannmuffen 8, 33 angeordnete Verbindungsstab 27 ist entlang der Verbindungsstab-Längsachse 28 nicht längs verschiebbar angeordnet. Der Verbindungsstab 27 ist um die Verbindungsstab-Längsachse 28 drehbar angeordnet und kann über den Innengewindeabschnitt 15, 29 entlang der Verbindungsstab-Längsachse 28 verlagert werden. Die Spannmuttern 11, 26 sind in die jeweils korrespondierenden Spannmuffen 8 bzw. 33 eingeschraubt. Die Spannmuffen 8, 33 sind also Bestandteil der Fertig-Bauelemente 36 bzw. 37.

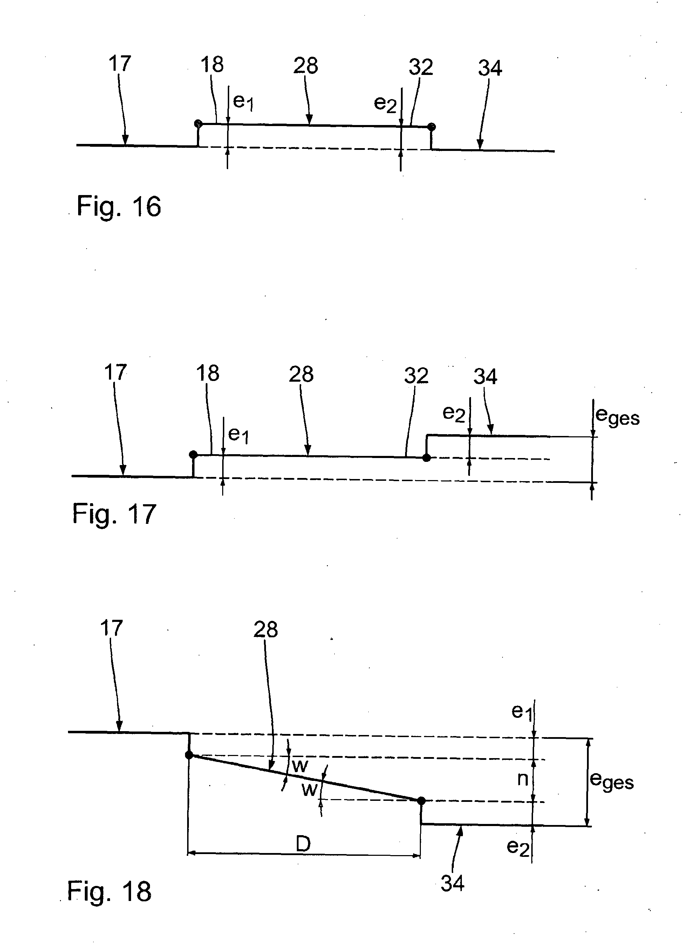

Die Einbausituationen der Einrichtung 25 gemäß Fig. 13 und 14 sind schematisch in den Fig. 16 bzw. 17 dargestellt. Daraus ergibt sich, dass in der Einbausituation gemäß Fig. 13, 16 sich die erste Exzentrizität e₁ und die zweite Exzentrizität e₂, die identisch sind, kompensieren. Die beiden Spannmuffen-Längsachsen 17, 34 sind konzentrisch zueinander orientiert. Die Gesamtexzentrizität e_{ges}, die es auszugleichen gilt, ist Null.

Bei der Einbausituation gemäß Fig. 14, 17 sind die beiden Spannmuffen-Längsachsen 17, 34 mit einer Gesamt-Exzentrizität e_{ges} zueinander angeordnet, die der Summe der Einzelexzentrizitäten e₁ und e₂ entspricht.

In beiden Einbaufällen ist der Verbindungsstab 27 mit der Verbindungsstab-Längsachse 28 jeweils parallel zu den Spannmuffen-Längsachsen 17, 34 orientiert. Dadurch, dass der Verbindungsstab 27 mit einem Grobgewinde ausgeführt ist, kann der Verbindungsstab mit der Verbindungsstab-Längsachse 28 in einem Neigungswinkel w gegenüber der ersten Spannmutter-Längsachse 13 bzw. gegenüber der ersten Spannmuffen-Längsachse 17 und/oder gegenüber der zweiten Spannmutter-Längsachse 31 bzw. der zweiten Spannmuffen-Längsachse 34 angeordnet sein.

Eine derartige Einbausituation mit einer Anordnung des Verbindungsstabs 27 unter einem Neigungswinkel w ist in Fig. 18 gezeigt. Aus Darstellungsgründen ist die Einbausituation gemäß Fig. 18 übertrieben dargestellt. Der maximal zulässige Neigungswinkel w hängt von den zulässigen Toleranzen bei der Herstellung des Verbindungsstabs 27 mit dem Grobgewinde und von einem Abstand D der zu verbindenden Stäbe entlang deren Längsachsen ab. In einem konkreten Ausführungsbeispiel einer Einbausituation gemäß Fig. 18 beträgt der Abstand D 0,3 m. Der Verbindungsstab hat einen Außendurchmesser von 40 mm. Ein derartiger Verbindungsstab 27 ermöglicht eine Neigung n senkrecht zu den Längsachsen 17, 34 entlang des Abstands D von 6 mm. Bei einem derartigen Ausführungsbeispiel ist es denkbar, Spannmuttern 11, 26 einzusetzen, die jeweils eine Exzentrizität e₁ = e₂ = 5 mm aufweisen. Bei diesem Ausführungsbeispiel kann gemäß der in Fig. 18 gezeigten Einbausituation eine Gesamtexzentrizität e_{ges} von 16 mm ausgeglichen werden. Die Gesamtexzentrizität e_{ges} ergibt sich aus der Summe der beiden Einzelexzentrizitäten e₁, e₂ und der Neigung n. Die erfindungsgemäße Einrichtung ermöglicht also ausgehend von einer neutralen Verbindung ohne Höhenversatz gemäß der Einbausituation in der Fig. 16 einen Ausgleich von exzentrisch angeordneten Bauteilen, insbesondere von Stäben, bis zu einer maximalen Gesamt-Exzentrizität gemäß Fig. 18.

Es ist klar, dass die Einbausituation gemäß Fig. 18 spiegelbildlich zu einer der Längsachsen 17 oder 34 nach oben bzw. nach unten angeordnet sein kann. Die erfindungsgemäße Einrichtung bietet einen großen Gestaltungsspielraum beim Ausgleich von exzentrisch zueinander angeordneten Stäben oder Bauteilen.

## Patentansprüche

1. Vorrichtung (1; 1a) zum Verbinden von zwei exzentrisch zueinander angeordneten Stäben (2, 3), wobei die Vorrichtung (1; 1a) umfasst
a. eine Spannmuffe (8) mit einer entlang einer Spalnmuffen-Längsachse (17) verlaufenden Spannmuffen-Innenbohrung (7), die umfasst
i. einen ersten Spannmuffen-Innengewinde-Abschnitt (6) zum Einschrauben eines ersten Stabes (2) in die Spannmuffe (8), wobei der erste Spannmuffen-Innengewinde-Abschnitt (6) einen ersten Spannmuffen-Gewindedurchmesser (dᵢ₁) aufweist,
ii. einen zweiten Spannmuffen-Innengewinde-Abschnitt (10) mit einem zweiten Spannmuffen-Gewindedurchmesser (dᵢ₂),
b. eine eine entlang einer Spannmutter-Längsachse (13) verlaufende Spannmutter-Innenbohrung (14) aufweisende Spannmutter (11) umfassend
i. einen Spannmutter-Außengewinde-Abschnitt (12) zum Einschrauben der Spannmutter (11) in die Spannmuffe (8), wobei der Spannmutter-Außengewinde-Abschnitt (12) einen Spannmutter-Außengewindedurchmesser aufweist,
**dadurch gekennzeichnet, dass** die Spannmutter (11) ferner einen Spannmutter-Innengewinde-Abschnitt (15) zum Einschrauben eines zweiten Stabes (3) in die Spannmutter (11) aufweist, wobei der Spannmutter-Innengewinde-Abschnitt (15) einen Spannmutter-Innengewindedurchmesser (dᵢ₄) aufweist und wobei der Spannmutter-Innengewinde-Abschnitt (15) eine Spannmutter-Innengewinde-Längsachse (18) aufweist, die in einem eingeschraubten Zustand der Spannmutter (11) in der Spannmuffe (8) mit einer von Null verschiedenen Exzentrizität (e) zur Spannmuffen-Längsachse (17) angeordnet ist.

2. Vorrichtung gemäß Anspruch 1, **gekennzeichnet durch** einen entlang der Spannmuffen-Längsachse (17) zwischen dem ersten Spannmuffen-Innengewinde-Abschnitt (6) und dem zweiten Spannmuffen-Imengewinde-Abschnitt (10) angeordneten Spannmuffen-Hülsen-Abschnitt (21), der einen Spannmuffen-Hülsendurchmesser (dᵢ₃) aufweist.

3. Vorrichtung gemäß Anspruch 2, **dadurch gekennzeichnet, dass** der Spannmuffen- Hülsendurchmesser (dᵢ₃) größer ist als der erste Spannmuffen-Gewindedurchmesser (dᵢ₁).

4. Vorrichtung gemäß einem der vorangehenden Ansprüche, **dadurch gekennzeichnet, dass** der erste Spannmuffen-Innengewinde-Abschnitt (6) ein erstes Grobgewinde mit einer ersten Grobgewindesteigung umfasst.

5. Vorrichtung gemäß einem der vorangehenden Ansprüche, **dadurch gekennzeichnet, dass** der zweite Spamnmuffen-Innengewinde-Abschnitt (10) ein Regelgewinde, insbesondere ein metrisches Regelgewinde, umfasst mit einer Regelgewindesteigung, die insbesondere kleiner ist als eine erste Grobgewindesteigung eines ersten Grobgewindes des ersten Spannmuffen-Innengewinde-Abschnitts (6).

6. Vorrichtung gemäß einem der vorangehenden Ansprüche, **dadurch gekennzeichnet, dass** der Spannmutter-Innengewinde-Abschnitt (15) ein zweites Grobgewinde mit einer zweiten Grobgewindesteigung umfasst, wobei das zweite Grobgewinde insbesondere identisch zu einem ersten Grobgewinde des ersten Spannmuffen-Innengewinde-Abschnitts (6) ausgeführt ist.

7. Vorrichtung gemäß einem der vorangehenden Ansprüche, **dadurch gekennzeichnet, dass** die Spannmuffe (8) einen Spannmuffen-Werkzeug-Abschnitt aufweist, der eine senkrecht zur Spannmuffen-Längsachse (17) orientierte unrunde Kontur aufweist, und/oder die Spannmutter (11) einen Spannmutter-Werkzeug-Abschnitt (22) aufweist, der eine senkrecht zur Spannmutter-Längsachse (13) orientierte unrunde Kontur aufweist.

8. Einrichtung (25; 25a) zum Verbinden von zwei Bauelementen mit jeweils einem Stab (2, 3), wobei die Einrichtung (25; 25a) umfasst
a. eine eine entlang einer ersten Spannmutter-Längsachse (13) verlaufende erste Spannmutter-Innenbohrung (14) aufweisende erste Spannmutter (11) umfassend
i. einen ersten Spannmutter-Außengewinde-Abschnitt (12) zum Einschrauben der ersten Spannmutter (11) in eine korrespondierende erste Spannmuffe (8), wobei der erste Spannmutter-Außengewinde-Abschnitt (12) einen ersten Spannmutter-Außengewindedurchmesser aufweist,
ii. einen ersten Spannmutter-Innengewinde-Abschnitt (15), der einen ersten Spannmutter-Innengewindedurchmesser und eine erste Spannmutter-Innengewinde-Längsachse (18) aufweist,
b. eine eine entlang einer zweiten Spannmutter-Längsachse (31) verlaufende zweite Spannmutter-Innenbohrung aufweisende zweite Spannmutter (26) umfassend
i. einen zweiten Spannmutter-Außengewinde-Abschnitt zum Einschrauben der zweiten Spannmutter (26) in eine korrespondierende zweite Spannmuffe (33), wobei der zweite Spannmutter-Außengewinde-Abschnitt einen zweiten Spannmutter-Außengewindedurchmesser aufweist,
ii. einen zweiten Spannmutter-Innengewinde-Abschnitt (35), der einen zweiten Spannmutter-Innengewindedurchmesser und eine zweite Spannmutter-Innengewinde-Längsachse (32) aufweist,
c. einen die ersten Spannmutter (11) und die zweite Spannmutter (26) verbindenden, eine Verbindungsstab-Längsachse (28) aufweisenden Verbindungsstab (27) mit einem Verbindungsstab-Außengewinde,
**dadurch gekennzeichnet, dass**
d. die erste Spannmutter-Innengewinde-Längsachse (18) in einem eingeschraubten Zustand der ersten Spannmutter (11) in der ersten Spannmuffe (8) mit einer von Null verschiedenen ersten Exzentrizität (e₁) zu einer ersten Spannmuffen-Längsachse (17) angeordnet ist,
e. die zweite Spannmutter-Innengewinde-Längsachse (32) in einem eingeschraubten Zustand der zweiten Spannmutter (26) in der zweiten Spannmuffe (33) mit einer von Null verschiedenen zweiten Exzentrizität (e₂) zu einer zweiten Spannnuffen-Längsachse (34) angeordnet ist,
f. das Verbindungsstab-Außengewinde zum Einschrauben in den ersten Spannmutter-Innengewinde-Abschnitt (15) und in den zweiten Spannmutter-Innengewinde-Abschnitt (35) dient.

9. Einrichtung gemäß Anspruch 8, **gekennzeichnet durch** eine mit der ersten Spannmutter (11) korrespondierende erste Spannmuffe (8) und/oder eine mit der zweiten Spannmutter (26) korrespondierende zweite Spannmuffe (33).

10. Einrichtung gemäß Anspruch 9, **dadurch gekennzeichnet, dass** die Spannmuffen (8, 33) jeweils einen entlang der Spannmuffen-Längsachse (17, 34) zwischen einem ersten Spannmuffen-Innengewinde-Abschnitt (6) und einem zweiten Spannmuffen-Innengewinde-Abschnitt (10) angeordneten Spannmuffen-Hülsen-Abschnitt (21) aufweisen, der eine Spannmuffen-Hülsenlänge (l_{SH}) aufweist, die mindestens das Zweifache der Gewindesteigung des Außen-Grobgewindes des einzuschraubenden Verbindungsstabs, insbesondere mindestens das Dreifache und insbesondere mindestens das Vierfache, beträgt.

11. Einrichtung gemäß einem der Ansprüche 8 bis 10, **dadurch gekennzeichnet, dass** das Verbindungsstab-Außengewinde ein, insbesondere entlang der Verbindungsstab-Längsachse (28) durchgängiges, Grobgewinde ist.

12. Einrichtung gemäß einem der Ansprüche 8 bis 11, **dadurch gekennzeichnet, dass** die erste Spannmutter (11) und die zweite Spannmutter (26) identisch ausgeführt sind.

13. Einrichtung gemäß einem der Ansprüche 8 bis 12, **dadurch gekennzeichnet, dass** die erste Spannmutter (11) an einem ersten Ende auf den Verbindungsstab (27) und die zweite Spannmutter (26) an einem zweiten, dem ersten Ende gegenüberliegend angeordneten Ende auf den Verbindungsstab (27) aufgeschraubt sind.

14. Einrichtung gemäß einem der Ansprüche 8 bis 13, **dadurch gekennzeichnet, dass** die Verbindungsstab-Längsachse (28) in einem Neigungswinkel (w) gegenüber der ersten Spannmutter-Längsachse (13) und/oder gegenüber der zweiten Spannmutter-Längsachse (31) angeordnet ist, wobei der Neigungswinkel (w) höchstens 1,2°, insbesondere höchstens 1,1° und insbesondere höchstens 1,0° beträgt.

## Claims

1. A device (1; 1a) for connecting two rods (2, 3) arranged eccentrically relative to one another, wherein the device (1; 1a) comprises:
a. a clamping sleeve (8) with a clamping-sleeve internal bore (7) extending along a longitudinal clamping-sleeve axis (17), which comprises
i. a first clamping-sleeve internal-thread portion (6) for screwing in a first rod (2) into the clamping sleeve (8),
wherein the first clamping-sleeve internal-thread portion (6) comprises a first clamping-sleeve thread diameter (dᵢ₁),
ii. a second clamping-sleeve internal-thread portion (10) with a second clamping-sleeve thread diameter (dᵢ₂),
b. a clamping nut (11) comprising a clamping-nut internal bore (14) extending along a clamping-nut longitudinal axis (13), comprising
i. a clamping-nut external-thread portion (12) for screwing in the clamping nut (11) into the clamping sleeve (8),
wherein the clamping-nut external-thread portion (12) comprises a clamping-nut external thread diameter,
**characterised in that**
the clamping nut (11) further comprises a clamping-nut internal-thread portion (15) for screwing in a second rod (3) into the clamping nut (11),
wherein the clamping-nut internal-thread portion (15) comprises a clamping-nut internal thread diameter (dᵢ₄) and
wherein the clamping-nut internal-thread portion (15) comprises a clamping-nut internal thread longitudinal axis (18), which, in a screwed-in condition of the clamping nut (11), is arranged in the clamping sleeve (8) with an eccentricity (e) different from zero relative to the clamping-sleeve longitudinal axis (17).

2. The device according to claim 1,
**characterised by**
a clamping-sleeve tubular portion (21) arranged along the clamping-sleeve longitudinal axis (17) between the first clamping-sleeve internal-thread portion (6) and the second clamping-sleeve internal-thread portion (10), which comprises a clamping-sleeve tube diameter (dᵢ₃).

3. The device according to claim 2,
**characterised in that**
the clamping-sleeve tube diameter (dᵢ₃) is larger than the first clamping-sleeve thread diameter (dᵢ₁).

4. The device according to any one of the preceding claims,
**characterised in that**
the first clamping-sleeve internal-thread portion (6) comprises a first coarse thread with a first coarse-thread pitch.

5. The device according to any one of the preceding claims,
**characterised in that**
the second clamping-sleeve internal-thread portion (10) comprises a standard thread, especially a metrical standard thread, with a standard-thread pitch which is, more particularly, smaller than a first coarse-thread pitch of a first coarse thread of the first clamping-sleeve internal-threaded portion (6).

6. The device according to any one of the preceding claims,
**characterised in that**
the clamping-nut internal-thread portion (15) comprises a second coarse thread with a second coarse-thread pitch,
wherein the second coarse thread is embodied, more particularly, identically to a first coarse thread of the first clamping-sleeve internal thread portion (6).

7. The device according to any one of the preceding claims,
**characterised in that**
the clamping sleeve (8) comprises a clamping-sleeve tool portion, which comprises a non-round contour orientated perpendicular to the clamping-sleeve longitudinal axis (17), and/or the clamping nut (11) comprises a clamping-nut tool portion (22), which comprises a non-round contour orientated perpendicular to the clamping-nut longitudinal axis (13).

8. An arrangement (25; 25a) for connecting two construction elements in each case with a rod (2, 3),
wherein the arrangement (25; 25a) comprises
a. a first clamping nut (11) comprising a first clamping-nut internal bore (14) extending along a first clamping-nut longitudinal axis (13), comprising
i. a first clamping-nut external thread portion (12) for screwing in the first clamping nut (11) into a corresponding first clamping sleeve (8),
wherein the first clamping-nut external thread portion (12) comprises a first clamping-nut external thread diameter,
ii. a first clamping-nut internal thread portion (15), which comprises a first clamping-nut internal thread diameter and a first clamping-nut internal thread longitudinal axis (18),
b. a second clamping nut (26) comprising a second clamping-nut internal bore extending along a second clamping-nut longitudinal axis (31), comprising
i. a second clamping-nut external thread portion for screwing in the second clamping nut (26) into a corresponding second clamping sleeve (33),
wherein the second clamping-nut external thread portion comprises a second clamping-nut external thread diameter,
ii. a second clamping-nut internal thread portion (35), which comprises a second clamping-nut internal thread diameter and a second clamping-nut internal thread longitudinal axis (32),
c. a connecting rod (27) with a connecting-rod external thread connecting the first clamping nut (11) and the second clamping nut (26), comprising a connecting-rod longitudinal axis (28),
**characterised in that**
d. in a screwed-in condition of the first clamping nut (11), the first clamping-nut internal thread longitudinal axis (18) is arranged in the first clamping sleeve (8) with an eccentricity (e1) different from zero relative to a first clamping-sleeve longitudinal axis (17),
e. in a screwed-in condition of the second clamping nut (26), the second clamping-nut internal thread longitudinal axis (32) is arranged in the second clamping sleeve (33) with a second eccentricity (e₂) different from zero relative to a second clamping sleeve longitudinal axis (34),
f. the connecting-rod external thread serves for screwing into the first clamping-nut internal thread portion (15) and into the second clamping-nut internal thread portion (35).

9. The arrangement according to claim 8,
**characterised by**
a first clamping sleeve (8) corresponding with the first clamping nut (11) and/or a second clamping sleeve (33) corresponding with the second clamping nut (26).

10. The arrangement according to claim 9,
**characterised in that**
the clamping sleeves (8, 33) each comprise a clamping-sleeve tubular portion (21) arranged along the clamping-sleeve longitudinal axis (17, 34) between a first clamping-sleeve internal thread portion (6) and a second clamping sleeve internal thread portion (10), which comprises a clamping-sleeve tube length (ISH), which is at least twice, more particularly, at least three times, and more particularly, at least four times the thread pitch of the external coarse thread of the connecting rod to be screwed in.

11. The arrangement according to any one of claims 8 to 10,
**characterised in that**
the connecting-rod external thread is a continuous coarse thread, more particularly, extending along the connecting-rod longitudinal axis (28).

12. The arrangement according to any one of claims 8 to 11,
**characterised in that**
the first clamping nut (11) and the second clamping nut (26) are embodied in an identical manner.

13. The arrangement according to any one of claims 8 to 12,
**characterised in that**
the first clamping nut (11) is screwed onto the connecting rod (27) at a first end, and the second clamping nut (26) is screwed onto the connecting rod (27) at a second end arranged opposite to the first end.

14. The arrangement according to any one of claims 8 to 13,
**characterised in that**
the connecting-rod longitudinal axis (28) is arranged at an angle of inclination (w) relative to the first clamping-nut longitudinal axis (13) and/or relative to the second clamping nut longitudinal axis (31),
wherein the angle of inclination (w) is a maximum of 1.2°, more particularly, a maximum of 1.1° and more particularly, a maximum of 1.0°.

## Revendications

1. Dispositif (1 ; 1a) servant à relier deux barres (2, 3) disposées de manière excentrique l'une par rapport à l'autre, sachant que le dispositif (1 ; 1a) comprend
a. un manchon de serrage (8) pourvu d'un alésage intérieur de manchon de serrage (7) s'étendant le long d'un axe longitudinal de manchon de serrage (17), lequel alésage intérieur comprend
i. une première section de filetage intérieur de manchon de serrage (6) servant à visser une première barre (2) dans le manchon de serrage (8), sachant que la première section de filetage intérieur de manchon de serrage (6) présente un premier diamètre de filetage de manchon de serrage (dᵢ₁),
ii. une deuxième section de filetage intérieur de manchon de serrage (10) présentant un deuxième diamètre de filetage de manchon de serrage (dᵢ₂),
b. un écrou de serrage (11) présentant un alésage intérieur de manchon de serrage (14) s'étendant le long d'un axe longitudinal d'écrou de serrage (13), comprenant
i. une section de filetage extérieur d'écrou de serrage (12) servant à visser l'écrou de serrage (11) dans le manchon de serrage (8), sachant que la section de filetage extérieur d'écrou de serrage (12) présente un diamètre de filetage extérieur d'écrou de serrage,
**caractérisé en ce que** l'écrou de serrage (11) présente en outre une section de filetage intérieur d'écrou de serrage (15) servant à visser une deuxième barre (3) dans l'écrou de serrage (11), sachant que la section de filetage intérieur d'écrou de serrage (15) présente un diamètre de filetage intérieur d'écrou de serrage (dᵢ₄) et sachant que la section de filetage intérieur d'écrou de serrage (15) présente un axe longitudinal de filetage intérieur d'écrou de serrage (18), qui est disposé, lorsque l'écrou de serrage (11) est vissé dans le manchon de serrage (8), par rapport à l'axe longitudinal de manchon de serrage (17) selon une excentricité (e) différente de zéro.

2. Dispositif selon la revendication 1, **caractérisé par** une section de douille de manchon de serrage (21) disposée le long de l'axe longitudinal de manchon de serrage (17) entre la première section de filetage intérieur de manchon de serrage (6) et la deuxième section de filetage intérieur de manchon de serrage (10), laquelle section de douille de manchon de serrage présente un diamètre de douille de manchon de serrage (dᵢ₃).

3. Dispositif selon la revendication 2, **caractérisé en ce que** le diamètre de douille de manchon de serrage (dᵢ₃) est plus grand que le premier diamètre de filetage de manchon de serrage (dᵢ₁).

4. Dispositif selon l'une quelconque des revendications précédentes, **caractérisé en ce que** la première section de filetage intérieur de manchon de serrage (6) comprend un premier filetage grossier présentant un premier pas de filetage grossier.

5. Dispositif selon l'une quelconque des revendications précédentes, **caractérisé en ce que** la deuxième section de filetage intérieur de manchon de serrage (10) comprend un filetage normal, en particulier un filetage normal métrique, présentant un pas de filetage normal, qui est en particulier inférieur à un premier pas de filetage grossier d'un premier filetage grossier d'une première section de filetage intérieur de manchon de serrage (6).

6. Dispositif selon l'une quelconque des revendications précédentes, **caractérisé en ce que** la section de filetage intérieur d'écrou de serrage (15) comprend un deuxième filetage grossier présentant un deuxième pas de filetage grossier, sachant que le deuxième filetage grossier est réalisé en particulier de manière identique à un premier filetage grossier de la première section de filetage intérieur de manchon de serrage (6).

7. Dispositif selon l'une quelconque des revendications précédentes, **caractérisé en ce que** le manchon de serrage (8) présente une section d'outil de manchon de serrage, qui présente un contour à faux-rond orienté de manière perpendiculaire par rapport à l'axe longitudinal de manchon de serrage (17), et/ou **en ce que** l'écrou de serrage (11) présente une section d'outil d'écrou de serrage (22), qui présente un contour à faux-rond orienté de manière perpendiculaire par rapport à l'axe longitudinal d'écrou de serrage (13).

8. Système (25 ; 25a) servant à relier deux composants pourvus respectivement d'une barre (2, 3), sachant que le système (25 ; 25a) comprend
a. un premier écrou de serrage (11) présentant un premier alésage intérieur d'écrou de serrage (14) s'étendant le long d'un premier axe longitudinal d'écrou de serrage (13), comprenant
i. une première section de filetage extérieur d'écrou de serrage (12) servant à visser le premier écrou de serrage (11) dans un premier manchon de serrage (8) correspondant, sachant que la première section de filetage extérieur d'écrou de serrage (12) présente un premier diamètre de filetage extérieur d'écrou de serrage,
ii. une première section de filetage intérieur d'écrou de serrage (15), qui présente un premier diamètre de filetage intérieur d'écrou de serrage et un premier axe longitudinal de filetage intérieur d'écrou de serrage (18),
b. un deuxième écrou de serrage (26) présentant un deuxième alésage intérieur d'écrou de serrage s'étendant le long d'un deuxième axe longitudinal d'écrou de serrage (31), comprenant
i. une deuxième section de filetage extérieur d'écrou de serrage servant à visser le deuxième écrou de serrage (26) dans un deuxième manchon de serrage (33) correspondant, sachant que la deuxième section de filetage extérieur d'écrou de serrage présente un deuxième diamètre de filetage extérieur d'écrou de serrage,
ii. une deuxième section de filetage intérieur d'écrou de serrage (35), qui présente un deuxième diamètre de filetage intérieur d'écrou de serrage et un deuxième axe longitudinal de filetage intérieur d'écrou de serrage (32),
c. une barre de liaison (27) reliant le premier écrou de serrage (11) et le deuxième écrou de serrage (26), présentant un axe longitudinal de barre de liaison (28), pourvue d'un filetage extérieur de barre de liaison,
**caractérisé en ce**
d. **que** le premier axe longitudinal de filetage intérieur d'écrou de serrage (18) est disposé, lorsque le premier écrou de serrage (11) est vissé dans le premier manchon de serrage (8), par rapport à un premier axe longitudinal de manchon de serrage (17) selon une première excentricité (e₁) différente de zéro,
e. en ce que le deuxième axe longitudinal de filetage intérieur d'écrou de serrage (32) est disposé, lorsque le deuxième écrou de serrage (26) est vissé dans le deuxième manchon de serrage (33), par rapport à un deuxième axe longitudinal de manchon de serrage (34), selon une deuxième excentricité (e₂) différente de zéro,
f. en ce que le filetage extérieur de barre de liaison sert au vissage dans la première section de filetage intérieur d'écrou de serrage (15) et dans la deuxième section de filetage intérieur d'écrou de serrage (35).

9. Système selon la revendication 8, **caractérisé par** un premier manchon de serrage (8) correspondant au premier écrou de serrage (11) et/ou par un deuxième manchon de serrage (33) correspondant au deuxième écrou de serrage (26).

10. Système selon la revendication 9, **caractérisé en ce que** les manchons de serrage (8, 33) présentent respectivement une section de douille de manchon de serrage (21) disposée le long de l'axe longitudinal de manchon de serrage (17, 34) entre une première section de filetage intérieur de manchon de serrage (6) et une deuxième section de filetage intérieur de manchon de serrage (10), laquelle section de douille de manchon de serrage présente une longueur de douille de manchon de serrage (l_{DM}), qui est égale au moins à deux fois, en particulier au moins à trois fois et en particulier au moins à quatre fois, le pas de filetage du filetage grossier extérieur de la barre de liaison à visser.

11. Système selon l'une quelconque des revendications 8 à 10, **caractérisé en ce que** le filetage extérieur de barre de liaison est un filetage grossier continu en particulier le long de l'axe longitudinal de barre de liaison (28).

12. Système selon l'une quelconque des revendications 8 à 11, **caractérisé en ce que** le premier écrou de serrage (11) et le deuxième écrou de serrage (26) sont réalisés de manière identique.

13. Système selon l'une quelconque des revendications 8 à 12, **caractérisé en ce que** le premier écrou de serrage (11) est enfilé par vissage sur la barre de liaison (27), au niveau d'une première extrémité, et **en ce que** le deuxième écrou de serrage (26) est enfilé par vissage sur la barre de liaison (27), au niveau d'une deuxième extrémité disposée de manière à faire face à la première extrémité.

14. Système selon l'une quelconque des revendications 8 à 13, **caractérisé en ce que** l'axe longitudinal de barre de liaison (28) est disposé selon un angle d'inclinaison (a) par rapport au premier axe longitudinal d'écrou de serrage (13) et/ou par rapport au deuxième axe longitudinal d'écrou de serrage (31), sachant que l'angle d'inclinaison (a) présente une valeur maximale égale à 1,2°, en particulier égale à 1,1°, et en particulier égale à 1,0°.
